# EUROPÄISCHE PATENTANMELDUNG

(11) **EP 1 151 838 A2**
(43) Veröffentlichungstag der Anmeldung: **07.11.2001**
(21) Anmeldenummer: 99121899.1
(22) Anmeldetag: 23.05.1996
(51) Int. Cl.: B29C 37/00

(54) **Entformung von HÜlsen fÜr Schreibgeräte**

(30) Priorität: 24.05.1995 EP 95108034
(62) Teilanmeldung aus: 96919574.2
(71) Anmelder: Merz & Krell GmbH & Co., 64401 Gross-Bieberau (DE)
(72) Erfinder: Lang, Werner, 69469 Weinheim (DE); Vial, Siegbert, 35099 Burgwald (DE); Gantzert, Erich, 64401 Gross-Bieberau (DE)
(74) Vertreter: Leonhard, Frank Reimund, Dipl.-Ing.

(57) **Zusammenfassung**

Um die Entformung von Gewinden in Kuststoff-Hülsenstücken 1,2,3,4 zu erleichtern und die Herstellungskosten zu senken, wird eine konische Gewindestruktur (α₁,α₂,t) vorgeschlagen. Bei ihr und bei den diesbezüglichen Formwerkzeugen sind die in translatorischer Richtung z oder -z benachbarten Gewindeelemente 50,60,51,61 radial so beabstandet, daß jedes Gewindeelement beim Entformen E0,E1,E2 oder F0,F1 nur einmal "entrastet", um kein zweites Mal einzurasten.

## Beschreibung

Das technische Gebiet der Erfindung ist die vereinfachte Herstellung verbindbarer hülsenförmiger Bauteile, die im Spritzgießverfahren hergestellt werden und leicht lösbar (schraubend) miteinander verbunden und gelöst werden können.

Hülsenförmige Kunststoff-Bauteile werden bisher entweder über Schraubverbindungen oder über Rastverbindungen gefügt.
(a) **Schraubverbindungen** haben den Vorteil der einfachen Lösbarkeit. Ihre Anwendung ist jedem Verbraucher vertraut. Der wesentliche Nachteil dieser Verbindung liegt in der relativ teueren Herstellung. Bei der Herstellung von Teilen mit Außen- oder Innengewinden im Spritzgießverfahren sind Werkzeuge erforderlich, die zusätzlich zu der rein translatorischen Öffnungsbewegung der Spritzgießmaschine weitere translatorische oder rotatorische Bewegungen ausführen, um die Gewindekontur des Spritzgußteiles aus dem Werkzeug **entformen zu können**. Diese Werkzeuge sind durch die größere Anzahl von Bauteilen und durch die zusätzliche Entformungsbewegung teuer und störungsanfällig. Außerdem ist durch die zusätzliche Entformungsbewegung eine längere Zykluszeit im Produktionsprozeß erforderlich, die die Produktionskosten erhöht.
(b) **Rastverbindungen** haben umlaufende oder aus Segmenten bestehende Rillen oder Rippen ("Rastkonturen") auf rotationssymmetrischen oder polygonförmigen Hülsen. Diese Rastverbindungen lassen sich in der Regel kostengünstiger herstellen als Schraubverbindungen, da für die Entformung der Rastkonturen keine zusätzliche rotatorische Entformungsbewegung erforderlich ist. Teilweise werden aber zur Herstellung der Teile Werkzeuge eingesetzt, die zusätzlich zur translatorischen Öffnungsbewegung der Spritzgießmaschine weitere translatorische Bewegungen ausführen, um die Rastkonturen zu entformen, und dadurch teuer sind. Rastverbindungen haben den prinzipiellen Nachteil, daß die Kraft, die der Verbindung der zu fügenden Teile dient, beim Lösen der Verbindung überwunden werden muß. Rastverbindungen verwirklichen **immer einen Kompromiß** zwischen möglichst guter Haltbarkeit und möglichst geringer Lösekraft: **Keine** der beiden Anforderungen kann optimiert werden **ohne die andere zu verschlechtern.** Um reproduzierbare Halte- und Lösekräfte sicherzustellen, sind in der Produktion engere Toleranzen als bei Schraubverbindungen einzuhalten, wodurch die Herstellungskosten erhöht werden. Beim Lösen der Rastverbindung werden die Rastgeometrien teilweise verformt, so daß die Haltekräfte nach mehrmaligem Entrasten und Einrasten - also während des Gebrauchs - abnehmen. Zusätzlich dazu ist die Funktionsweise der Rastverbindungen für viele Verbraucher nicht verständlich und wird daher von diesen nicht als lösbare Verbindung erkannt, wodurch die Mehrfachutzung von nachfüllbaren Geräten insbesondere Kugelschreiber oder Tintenschreiber ungenutzt bleibt.

Die Erfindung **geht von der Aufgabe aus**, eine lösbare Verbindung von Hülsenteilen zu schaffen, die leicht gefertigt und leicht gelöst werden kann, aber gleichwohl eine hohe Haltekraft bei geschlossener Verbindung hat.

Das wird mit Anspruch 1, 7 oder Anspruch 11 bzw. 12 erreicht.

Die wendelförmig verlaufenden Rippen, Segmente oder Segmentteile befinden sich dabei auf einer konischen Hüllfläche, bei der die Tiefe der Fügekontur (Rippe oder Segment) in einem definierten Verhältnis zum Konuswinkel der Hüllfläche steht und so ausgelegt ist, daß die Fügekontur mit leicht plastischer oder elastischer Verformung entformt werden kann. Das wird erreicht, wenn jede Hinterschneidung (Erhöhung der Fügekontur) so gestaltet ist, daß die von ihr gebildete Fügekontur beim Entformen während der Bewegung in Entformungsrichtung +z oder -z nicht erneut in eine andere Hinterschneidung des Werkzeuges "einrasten" kann (Anspruch 1, Anspruch 7, Anspruch 12).

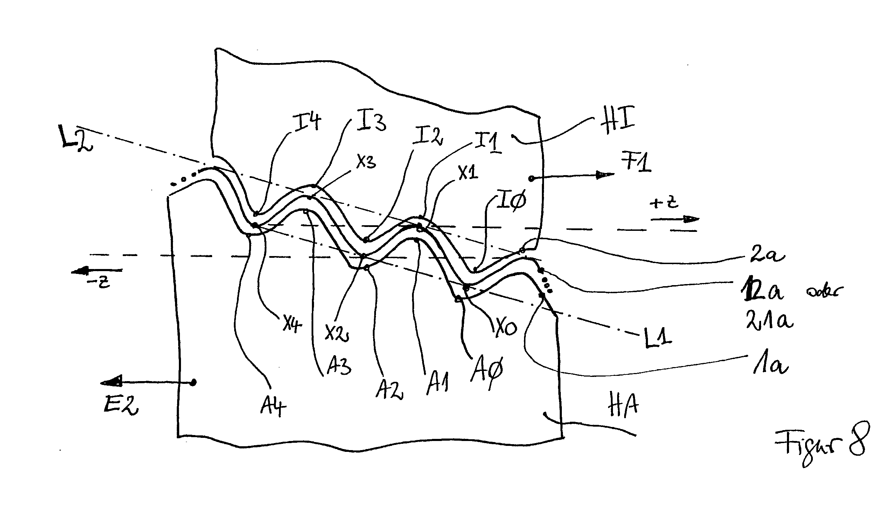

Statt dessen wird sie elastisch - oder in geringem Maße plastisch - (Ansprüche 3,4) an dem nächsten bzw. übernächsten Formwerkzeug-Vorsprung vorbeigeführt (Anspruch 7), wobei Anspruch 7 sich einfacher erschließt, wenn er unter Heranziehung der Figur 8 betrachtet wird und von dem Formwerkzeug-Vorsprung ausgegangen wird, der in der Gewindestruktur weiter innen ist.

Schraubende Entformung (zeitaufwendig) oder Entformung über auseinander fahrende Backen (aufwendig) werden erfindungsgemäß ersetzt durch eine im wesentlichen rein translatorisch (in Achsrichtung z) gerichtete Entformung (Anspruch 5), obwohl das entformte Teil ein schraubend zu fügendes Teil ist.

Alle Arten von Gewindeelementen sind einsetzbar (Anspruch 6), sie können zur weiteren Erleichterung der Entformung an ihrem Kamm oder an ihren Kanten abgerundet sein (Anspruch 6).

Die mit der Erfindung geschaffene Verbindung beinhaltet zumindest eines der Gewindeelemente, so daß sich bei der Verbindung mit bereits einer Umdrehung die gleichzeitig feste und dennoch leicht lösbare Verbindung der Hülsen ergibt. Trotz der einen Umdrehung sind alle Gewindegänge (beispielsweise 10) gleichzeitig im Eingriff und ergeben eine Verbindung die einerseits fast so schnell wie ein Bajonettverschluß gefügt (nur mit deutlich größerem Drehwinkel) wird und andererseits weitgehend die Haltekräfte eines üblichen zylindrischen Gewindes hervorbringt (nur mit deutlich reduziertem Drehwinkel).

Die Erfindung ermöglicht somit eine Gewinde-Schnellverbindung von Hülsen oder Hülsenstücken (Anspruch 11, Anspruch 12) für die Herstellung von Schreibgeräten, die dazuhin preiswert ist.

Die mit der Vorrichtung (Anspruch 7) oder mit dem Verfahren (Anspruch 1) hergestellten Hülsenstücke können als solche beschrieben werden, die einen "konischen Gewindeabschnitt" haben (Anspruch 12, Anspruch 11). Dabei ist der Gewindegrund auf einer gegenüber der Entformungsachse geneigten Oberfläche vorgesehen, welche Oberfläche eine hypothetische Fläche ist, da sie als ein Verbindungskonus einer wendelförmigen Gewinde-Grundlinie zu sehen ist. Diese Gewinde-Grundlinie verläuft schräg und ist in ihrer Neigung so auf die Höhe der Gewindestege abgestimmt, daß eine erste Gewindesteghöhe im wesentlichen dasselbe radiale Maß hat, wie der übernächste Gewindegrund, so daß in Entformungsrichtung +z oder -z ein Gewindesteg nur einmal an der ihn bildenden Formwerkzeug-Erhöhung plastisch oder elastisch verformt wird und danach von der daneben liegenden Formwerkzeug-Erhöhung nicht mehr bleibend verformt werden kann, insbesondere ohne Berührung oder mit nur unwesentlicher Berührung an ihm vorbeigeführt werden kann (Anspruch 12).

Das durchgehende Gewinde (Anspruch 12) kann auch so gestaltet werden, daß es mit bajonettartigen Segmenten ausgestaltet ist (Anspruch 11), wobei mehrere umfänglich beabstandete Gewindeelemente - Gewindestege, Gewindesegmente oder Gewindepunkte - in axialer Richtung hintereinander auf einer geneigten Grundfläche angeordnet sind, so daß die Gewindeelemente auf stetig versetzten (abnehmenden) radialen Niveaus liegen, um die zuvor erwähnte Bedingung zu erfüllen, daß ein durch ein Formwerkzeug gebildetes Gewindeelement nur einmal beim Entformen belastet wird.

Die Erfindung(en) werden nachfolgend anhand mehrerer Ausführungs**beispiele** erläutert und ergänzt.
- **Figur 1a,** **Figur 1b,** **Figur 1c und** **Figur 1d**: sind Beispiele für schraubend zu verbindende Gewindeelemente 1a, 1a', 1a", 1a* an einem Kugelschreiber-Griffstück.
- **Figur 2a**: zeigt die konische Gewinde-Außenkontur 1a an einer anderen Griffspitze 1, mit Teilschnitt und Durchmessern d, D (max/min) des Gewindegrundes und Gewindesteges;
- **Figur 2d**: zeigt dieselbe Kontur 3a an einem - auch versenkt eindrehbaren - Kopfteil 3 eines Schreibstiftes.

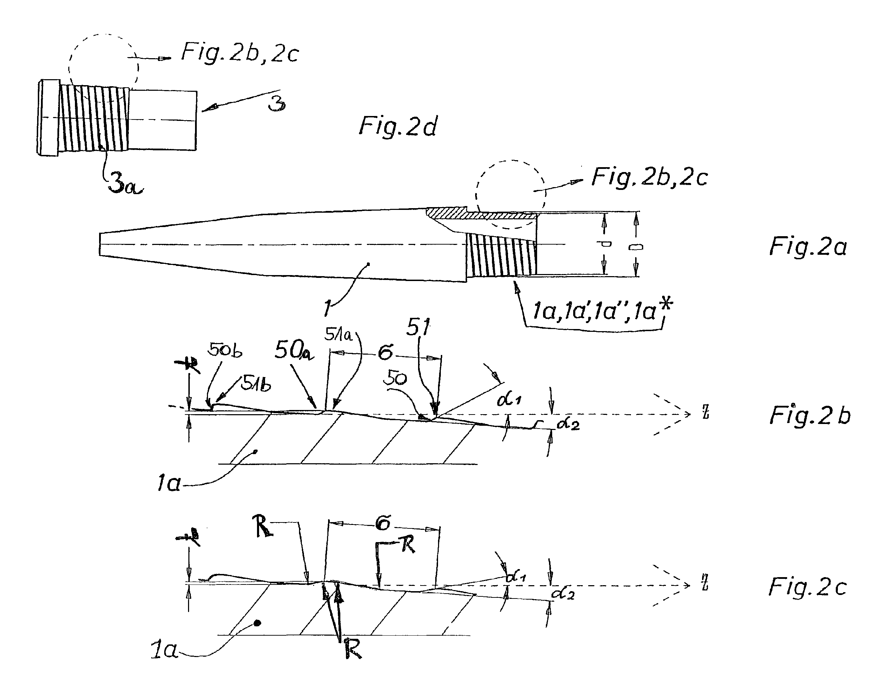

- **Figur 2b, Figur 2c**: zeigen Schnitte durch mögliche Gewinde- oder Rippenprofile davon.

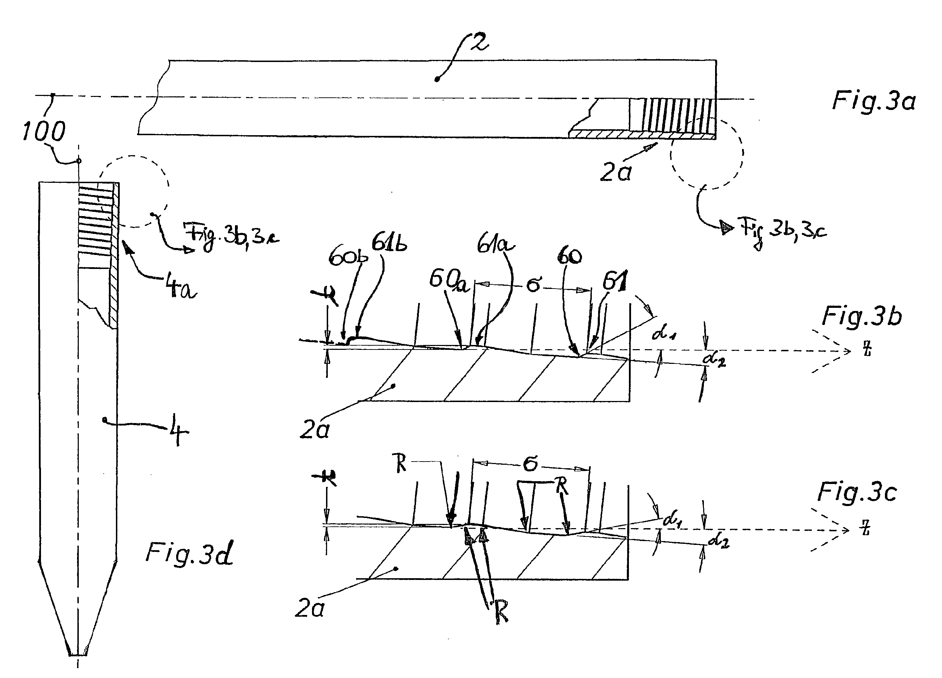

- **Figur 3a**: zeigt die konische Gewinde-Innenkontur 2a an einem zylindrischen Griff oder Schaft 2;
- **Figur 3d**: zeigt dieselbe Kontur 4a an einem konisch zulaufenden vorderen Hülsenteil 4, das mit dem Kopfteil 3 oben verschließbar ist.
- **Figur 3b, Figur 3c**: zeigen Schnitte durch mögliche Gewindeprofile davon.

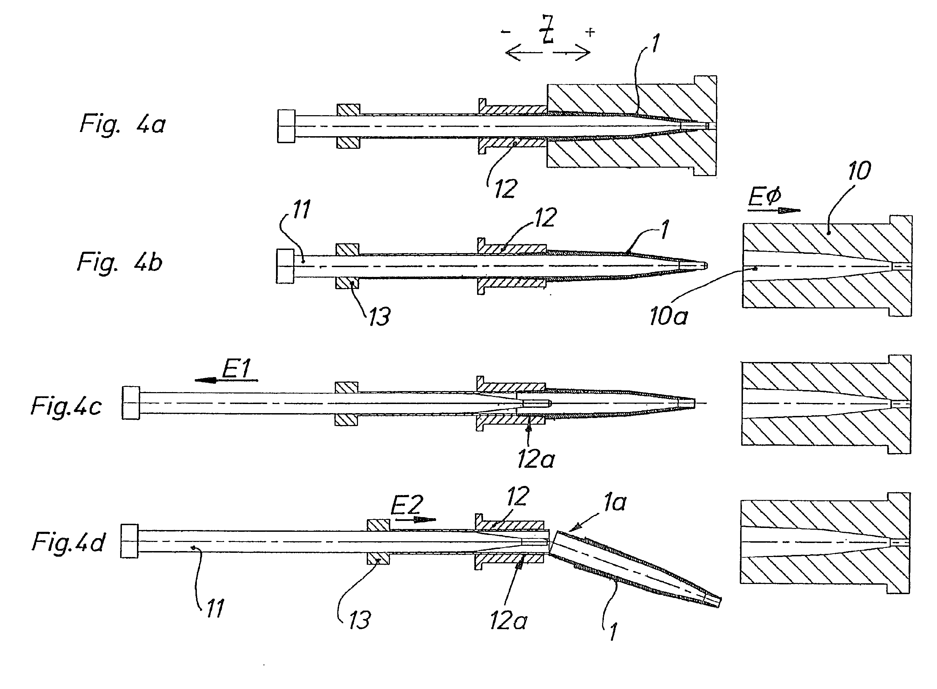

- **Figur 4a,** **Figur 4b, Figur 4c und** **Figur 4d**: sind jeweils unterschiedliche Momentanaufnahmen der erfindungsgemäßen Entformung eines Außengewindes 1a im Längsschnitt. Die Entformungsbewegungen sind mit E0, E1, E2 repräsentiert.

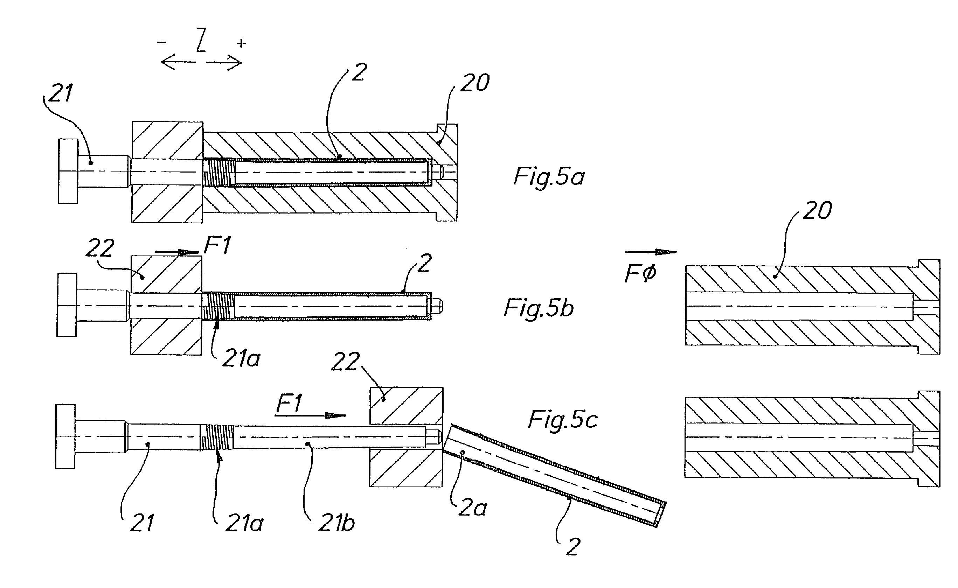

- **Figur 5a,** **Figur 5b und** **Figur 5c**: sind unterschiedliche Momentanaufnahmen der Entformung eines Innengewindes 2a im Längsschnitt. Die Entformungsbewegungen sind mit F0 und F1 repräsentiert.

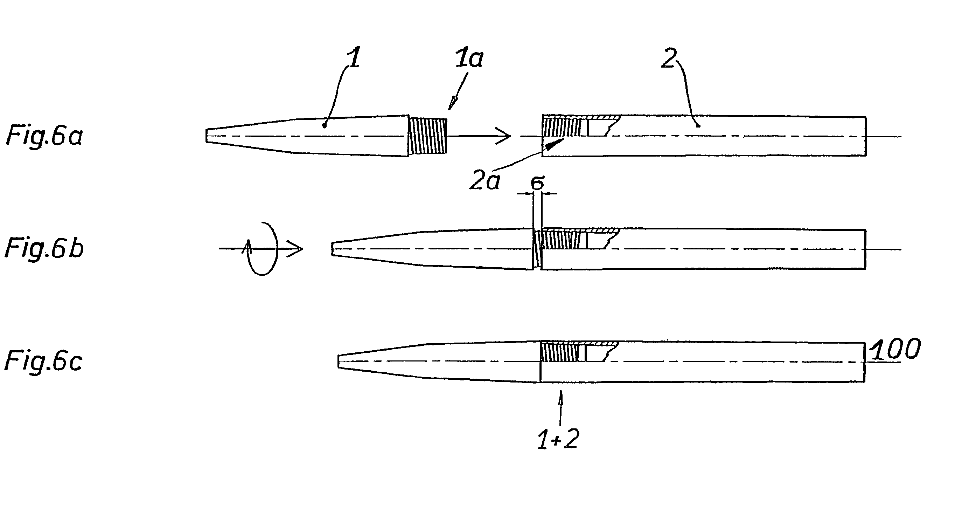

- **Figur 6a,** **Figur 6b und** **Figur 6c**: sind unterschiedliche Momentanaufnahmen der schraubenden Fügung eines Innengewindes 2a mit einem Außengewinde 1a an Hülsenstücken 1,2 im Längsschnitt (Fügung von Hülsen nach Figur 2a,3a).

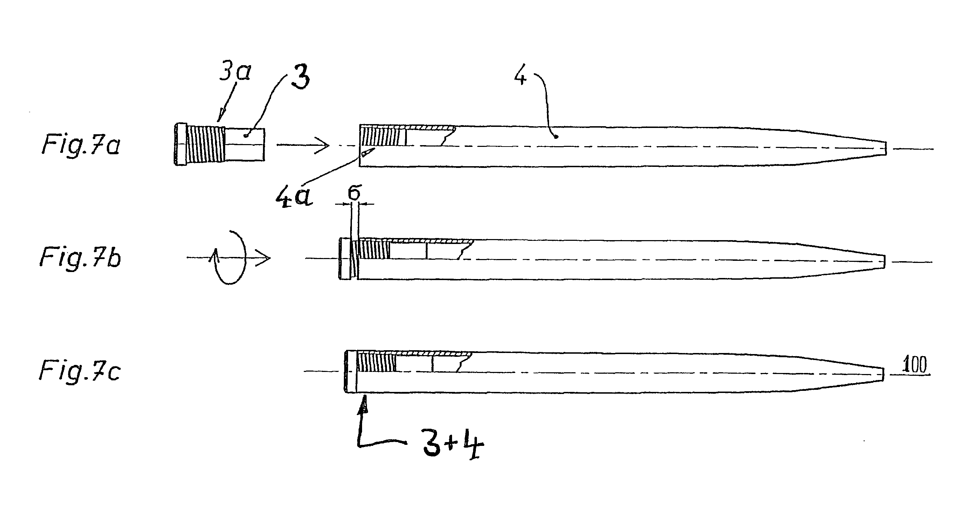

- **Figur 7a,** **Figur 7b und** **Figur 7c**: sind jeweils unterschiedliche Momentanaufnahmen der erfindungsgemäßen schraubenden Fügung - eines Innengewindes 4a mit einem Außengewinde 3a- an Hülsenstücken 3,4 im Längsschnitt (Fügung von Hülsenstücken gem. Figur 2d,3d).
- **Figur 8**: ist eine schematische (gleichzeitige) Schnitt-Darstellung der Gewindestruktur eines Innengewindes I1,I2,I3,I4 an einer Hülse HI und des formenden Gewindewerkzeugs 12a mit seiner Außenfläche sowie der Gewindekontur eines Außengewindes A1,A2,A3,A4 einer Hülse HA mit der es formenden Werkzeugkontur 21a, die auf der Innenfläche der Formlinie/Fläche 12a/21a liegt. Die Formfläche 12a ist trotz Darstellung als Linie eine Repräsentation sowohl des einen Werkzeugs 12a aus Figur 4d als auch des Werkzeugs 21a aus Figur 5c.

Die Verbindung 1/2 oder 3/4 (vgl. Figur 6,7) läßt sich mit einfach aufgebauten Spritzgießwerkzeugen kostengünstig herstellen. Die Teile lassen sich schnell und einfach schraubend fügen, nachdem sie zuvor axial zusammengeschoben wurden.

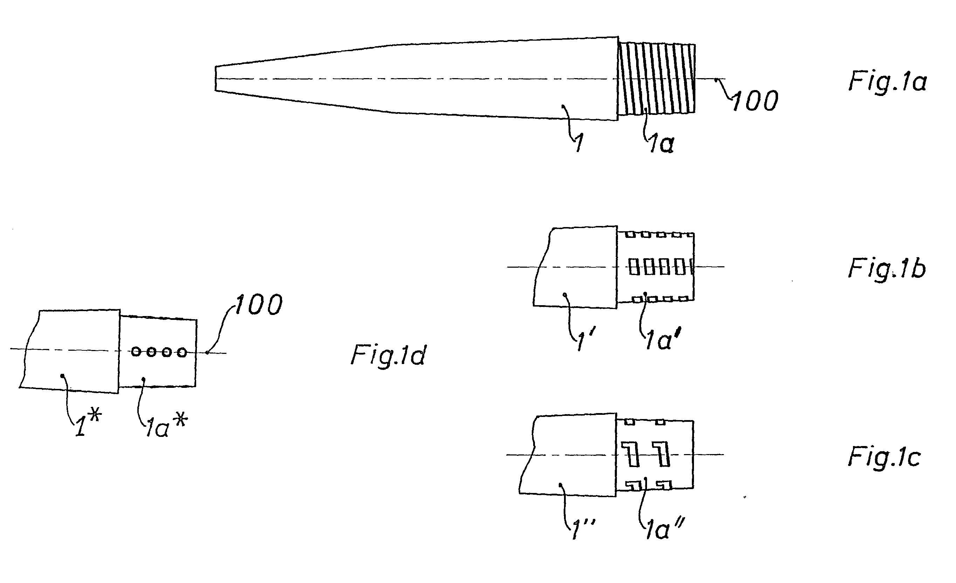

Das Verbindungssystem besteht aus einer wendelförmig - auf einer zylindrischen oder konischen Außen- oder/und Innenkontur verlaufenden - Rippe (Figur 1a). Diese Rippe kann auch unterbrochen sein und aus Segmenten bestehen (Figur 1b). Die Segmente können auch nur teilweise wendelförmig verlaufen (Figur 1c). Die Gewindeelemente sind ihrer Kontur und Höhe nach so gestaltet, daß sie mit einfachen Spritzgießwerkzeugen entformt werden. Alle Bewegungen der konturgebenden Teile des Werkzeuges verlaufen ausschließlich in z-Richtung der Öffnungsrichtung der Spritzgießmaschine (Figuren 4 und Figuren 5 zeigen die konturgebenden Bereiche zweier Werkzeuge zur Herstellung der beiden Hülsen-Fügeteile).

Die wendelförmig verlaufenden Noppen, Punkte 1a*, Segmente 1a' oder Segmentteile 1a" können auch nur an einem der zu verbindenden Fügeteile angeordnet sein, wenn sich am anderen Fügeteil in diese eingreifende nicht wendelförmig gestaltete Konturen 1* befinden (Figur 1d).

Die wendelförmig verlaufenden Noppen, Punkte, Segmente oder Segmentteile befinden sich auf einer konischen Hüllfläche, bei der die Tiefe der Fügekontur (Rippe oder Segment) in einem definierten Verhältnis zum Konuswinkel der Hüllfläche steht und so ausgelegt ist, daß die Fügekontur mit elastischer Verformung entformt werden kann. Das wird dadurch erreicht, daß an jeder Hinterschneidung vorbei die Fügekontur translatorisch nur einmal entformt wird.

Es wird nur einmal entformt, wenn entsprechend den folgenden Beziehungen ausgelegt wird (Figuren 2 und Figuren 3):
- εₘ [%]: mögliche Materialdehnung des Kunststoffes der Hülsen.
- D [mm]: größter Durchmesser der konischen Hülse 1a, 2a.
- d [mm]: kleinster Durchmesser der konischen Hülse 1a, 2a.
- t [mm]: Tiefe der Rippe.
- σ [mm]: Steigung der Wendel oder Rippenabstand.
- α₁ [°]: Entformungswinkel.
- α₂ [°]: Konuswinkel in der Hülse 1a, 2a.

1. t = d·εₘ/200
   d ist durch die konstruktiven Abmessungen gegeben,
2. α₂' = arcsin (t/σ)
   σ ist nach funktionalen Anforderungen zu wählen.
   α₂ ≥ α₂'

**Figur 2a** zeigt die konische Außenkontur, **Figuren 2b und 2c** zeigen Schnitte durch mögliche Rippenprofile. **Figur 3a** zeigt die konische Innenkontur, **Figuren 3b und 3c** zeigen Schnitte durch mögliche Rippenprofile.

Die mögliche Materialdehnung εₘ ist abhängig vom Kunststoff, dem Entformungswinkel α₁<90° und den Entformungsradien R. Aus εₘ und d ergibt sich mit Gleichung 1 die mögliche Rippentiefe t. Aus t und der gewünschten Steigung bzw. dem gewünschten Rippenabstand σ ergibt sich nach Gleichung 2 ein Bemessungs-Winkel α₂'.

Der Konuswinkel α₂ des Gewindestücks 1a/3a oder 2a/4a der Hülse 1 oder 2 oder 3 oder 4 sollte ideal größer oder gleich α₂' sein. Wird er größer gewählt, ist für das Drehfügen (nach dem anfänglichen Ineinanderstecken) ein kleinerer Verschluß-Drehwinkel nötig; wird er kleiner gewählt, so nähert sich das Entformen der Hülse dem mehrfachen Rasten und Entrasten an. Der Bemessungs-Winkel α₂' kann also als "Grenzwinkel" interpretiert werden.

Wird ein unelastischerer Kunststoff gewählt, ergibt sich ein spitzeres α₁ (Figur 2c) als bei elastischerem Kunststoff (Figur 2b).

Die Abmessung der formgebenden Kontur am Formwerkzeug ist so bemessen, daß ein Gewindeelement (Steg 51/61 mit benachbarter Nut 50/60) gegenüber dem im σ-Abstand (Steigung des Gewindes) benachbarten Gewindeelement **radial versetzt ist**. Normale - schwer entformbare - Gewinde haben keinen radialen Maßunterschied. Mit dem sich periodisch über die Gewindelänge wiederholenden radialen Maßunterschied ergibt sich der konische Gewindeabschnitt 1a,2a,3a,4a.

Ein Gewindeelement ist für ein Außengewinde und ein Innengewinde in den **Figuren 2a und 2c bzw. 3b und 3c** gezeigt. Die in Achsrichtung bzw. Entformungsrichtung z hintereinander angeordneten Gewindeelemente 50/51, daneben 50a, 51a, wieder daneben 50b, 51b bzw. in derselben Struktur das Innengewinde gemäß Figur 3b mit dem Gewindeelement 60,61, dem entgegen der Entformungsrichtung z daneben angeordneten nächsten Gewindeelement 61a,60a und dem übernächsten Gewindeelement 60b,61b haben sonstige Abmessungen t,σ und die beiden Bestimmungswinkel α₁,α₂, wobei α₂ den Konus für die Gewindegrundfläche bzw. die geneigte Gewindegestalt definiert.

Die Maße für diese Werte sind anhand der zuvor angegebenen Gleichung (1) und (2) beschrieben und der Entformungswinkel α₁ ist stark kunststoffabhängig. Sofern eine erleichterte Entformung bei härteren Kunststoffen gewollt ist, können die in Figur 2b und 3b noch scharfen Übergänge und Kanten in den Gewindeelementen 50/51 und 60/61 abgerundet werden, wofür eine Mehrzahl von Radien R in der Figur 2c und 3c eingezeichnet ist.

Die Entformungsbewegung eines Außengewindes ist in den **Figuren 4** mit Momentanaufnahmen erläutert. Den zuvor umschriebenen Gewindeabschnitt formt eine gewindeformende Hülse 12, die an einer Matrize 10 konzentrisch anliegt, um den Außendurchmesser eines Formhohlraums 10a zu bilden. In diesen Hohlraum wird ein Dorn 11 eingeführt, dessen Außendurchmesser um die Dicke der gewünschten Hülse 1 geringer ist, als der zuvor erwähnte Innendurchmesser von Matrize 10 und Gewindehülse 12. Stirnseitig hat der Dorn 11 einen etwa zylindrischen Stößel, der die vordere Austrittsöffnung der konisch zulaufenden Griffspitze 1 - des Formteils - bildet. In die Gewinde-Formhülse 12 eingreifend ist ein Auswerfer 13 dargestellt, der das rückwärtige Ende des zu formenden Gewindeabschnitts 1a im Gewinde-Formungsabschnitt 12a der Gewinde-Formungshülse 12 festlegt. Er liegt gleitend und eng an dem Dorn 11 an und ist gegenüber diesem verschieblich.

In der so dargestellten Zusammenstellung anhand der Figur 4a wird flüssiger Kunststoff in den Formhohlraum eingespritzt.

Nach Erkalten wird gemäß Figur 4b die erste Matrize 10 mit der Entformungsbewegung E0 in +z-Richtung von der Griffhülse 1 weg bewegt. Diese translatorische Bewegung wirft keine Probleme auf. Danach wird der Dorn 11 gemäß Figur 4c in der Bewegungsrichtung E1 zurückgezogen, während der Auswerfer 13 gegenüber der Gewinde-Formungshülse 12 unverändert seine Lage beibehält.

Gemäß Figur 4d wird schließlich über den Auswerfer 13 mit seiner Entformungsbewegung E2 das fertige Griffteil 1 mit dem konischen Gewindeabschnitt 1a nach vorne ausgeworfen, ohne daß eine Backenbewegung in einer Richtung senkrecht zu der Auswurfbewegung E2, die in +z-Richtung verläuft, erforderlich wäre und ohne daß eine schraubende Bewegung erforderlich ist, weder für das Gewinde-Formungsteil 12 noch für die Griffhülse 1.

Aufgrund der konischen Gestalt des Gewindes 1a, das an seinem rechten (inneren) Ende einen größeren Radius hat als an seinem linken (äußeren) Ende, entsprechend der Figur 2a, kann die Entformungsbewegung des Gewindes ohne Schaden für die Gewindegänge und Gewindestege in kurzer Zeit durchgeführt werden.

In vergleichbarer Weise arbeitet der Herstellprozeß für ein Innengewinde, erläutert anhand der **Figuren 5a bis 5c.** Auch hier ist eine Matrize 20 mit einem Formhohlraum vorgesehen, die stirnseitig dicht an einem Auswerferblock 22 in Figur 5a anliegt. Die Außenkontur des formenden Hülsenstücks 2 liegt damit fest. Ein Stößel 21 wird in den Formhohlraum eingefahren, um zwischen seiner Außenfläche und der Innenfläche der Matrize 20 einen Formhohlraum für den Spritzguß der Hülse 2 zu bilden. An dem Stößel 21 ist ein Gewinde-Formungsbereich 21a vorgesehen, der im eingefahrenen Zustand direkt hinter dem Auswerfer 22 zu liegen kommt. In der so beschriebenen Zusammenführung ist die Anordnung bereit, mit Kunststoff im Spritzgießverfahren gefüllt zu werden, wie die Figur 5a veranschaulicht.

Bei der Entformung wird zunächst das problemlose Matrizenteil 20 in der Bewegung F0 axial abgeschoben, wobei F0 in +z-Richtung verläuft.

Danach kann mit dem klotzförmigen Auswerfer 22 der weitgehend erstarrte Hülsenteil 2 von dem konischen Gewinde-Bildungsabschnitt 21a axial abgeschoben werden, auch in +z-Richtung, wobei der Auswerfer 22 eine axiale Bewegung in Richtung F1 vornimmt, die etwa der Länge des Dorns 21 entspricht. In gleicher Weise kann aber auch der Dorn 21 zurückgezogen werden, während der Block 22 in Ruhestellung verbleibt, so daß eine -F1-Bewegung die Entformung der Hülse 2 erreicht. Auch hier wird keine radiale Bewegung benötigt, um das Hülsenstück 2 zu entformen, es wird keine Drehbewegung der Hülse 2 oder des Dorns 21 angewendet, so daß die Entformung sicher, schonend und schnell erfolgen kann.

Die Zusammenfügung eines Griffstücks 1 und einer Schafthülse 2 ist in ihren drei Stufen in den **Figuren 6** beschrieben. Figur 6a zeigt das stückweise axiale Ineinanderschieben des konischen Außengewindes 1a und des konischen Gegengewindes (Innengewindes) 2a bis auf einen Abstand, der - bei hier gewähltem α₂'=α₂ - der Gewindesteigung σ entspricht. Danach wird eine schraubende Bewegung in der Figur 6b eingesetzt, die etwa eine Umdrehung sein kann, um alle Gewindeabschnitte zusammen in lösbar haltenden Eingriff gemäß Figur 6c zu bringen. In vergleichbarer Weise arbeitet die Zusammenfügung der Hülsenteile 3 und 4: Axiales Ineinanderstecken bis auf einen kurzen Restweg σ - bei hier gewähltem α₂'=α₂ - und anschließendes Drehfügen zum lösbaren aber festen Aneinanderfügen. Die Figur 7 kann auch so betrachtet werden, daß das Endstück 3 auf das noch freie Ende der Hülse 2 gemäß Figur 6 aufgeschraubt wird, so daß ein Kugelschreiber durch drei Teile hülsenförmiger Natur gebildet wird, von denen jeweils zwei mit der hier beschriebenen Fügung von konischen Gewinden miteinander in Eingriff kommen. Der kurze Restweg σ verändert sich mit geänderter Wahl für α₂. Er wird kleiner, wenn α₂ größer als α₂' wird.

**Figur 8** veranschaulicht ein konisches Gewinde, wobei der Gewindebildner (das Werkzeug, das einen Gewindeformungs-Abschnitt für ein Außengewinde oder ein Innengewinde trägt) nur durch eine einzige Linie 12a oder 21a in der Mitte der Figur 8 dargestellt ist.
(a) Oberhalb dieser Linie wird eine Hülse HI abschnittsweise gezeigt, die ein Innengewinde trägt.
(b) Unterhalb der Linie 21a wird eine Hülse HA gezeigt, die ein Außengewinde trägt.

Die Hülse HI mit Innengewinde entspricht den Figuren 5, wobei korrespondierend die Entformungsbewegung F1 auch in der Figur 8 dargestellt ist. Die Hülse HA mit Außengewinde entspricht den Figuren 4, wobei in der Figur 8 korrespondierend zu den Figuren 4 auch die Entformungsbewegung E2 dargestellt ist.

An der Figur 8 kann ersehen werden, welche Korrespondenzen zwischen einer bestimmten Formwerkzeug-**Erhöhung** (Teil des Werkzeuges, der eine Vertiefung in dem Innengewinde oder Außengewinde bewirkt) und einer dazu benachbarten Formwerkzeug-**Vertiefung** besteht, die für den entsprechend benachbarten Vorsprung an demselben des zuvor erwähnten Gewindes verantwortlich zeichnet.

Mit "X" sind alle Werkzeug-Vorsprünge und -Vertiefungen bezeichnet, mit "A" alle Außengewinde-Erhöhungen und - Vertiefungen und mit "I" alle Innengewinde-Erhöhungen und - Vertiefungen.
(a) Beispielsweise erzeugt eine Formwerkzeug-Erhöhung X1 eine entsprechende Innengewinde-Vertiefung I1 in der Hülse HI. Die in -z-Richtung benachbarte Erhöhung I2 wird von der benachbarten Formwerkzeug-Vertiefung X2 geformt und die dazu weiter benachbarte Formwerkzeug-Erhöhung X3 formt die diesbezügliche Innengewinde-Vertiefung I3. Für das konische Gewinde kann eine Beziehung aufgestellt werden, zwischen der nächst folgenden Innengewinde-Erhöhung I4 (als Folge der diesbezüglichen Werkzeug-Vertiefung X4) und der zuvor erwähnten Formwerkzeug-Erhöhung X1. Ist das radiale Maß von I4 dasselbe, wie dasjenige von X1, so läßt sich die HI in Entformungsrichtung F1 problemlos entformen, ohne daß I4 außer an dem ihn formenden Werkzeug-Vorsprung X3 noch an einem weiteren Werkzeug-Vorsprung berührend passieren muß. Statt dessen passiert er alle Werkzeug-Vorsprünge X1 und alle davor liegenden (in Entformungsrichtung +z), ohne sie zu berühren.
   Die entsprechende Linie L2 als Verbindung aller Formwerkzeug-Erhöhungen X1,X3,... zeigt den Winkel α₂, wie er zuvor umschrieben wurde.
(b) In analoger Weise, wie oben für die Hülse HI beschrieben, kann dieselbe Entformungsbewegung E2 und dieselbe Korrespondenz zwischen der Formwerkzeug-Vertiefung X1 und dem diesbezüglichen Gewindesteg A1 und der um mehr als eine Gewindesteigung σ in Richtung E2 beabstandete Formwerkzeug-Steg X4 aufgestellt werden. Die Verbindung aller Formwerkzeug-Erhöhungen liegen auf der Kegelfläche L1, die strichpunktiert eingezeichnet ist.

Um die Entformung von Gewinden in Kuststoff-Hülsenstücken 1,2,3,4 zu erleichtern und die Herstellungskosten zu senken, wird eine konische Gewindestruktur (α₁,α₂,t) vorgeschlagen. Bei ihr und bei den diesbezüglichen Formwerkzeugen sind die in translatorischer Richtung z oder -z benachbarten Gewindeelemente 50,60,51,61 radial so beabstandet, daß jedes Gewindeelement beim Entformen E0,E1,E2 oder F0,F1 nur einmal "entrastet", um kein zweites Mal einzurasten.

## Patentansprüche

1. **Verfahren** zum Herstellen leicht aus ihrer Form (12,21) entformbarer Kunststoff-Hülsenstücke (1,2), die lösbar (schraubend) zusammengefügt werden können - insbesondere des hinteren Schaftes (2) und der vorderen Griffhülse (1) oder des rückwärtigen Kopfteils (3) und vorderen Schaftes (4) eines Schreibstiftes -, bei dem
(a) auf einer leicht konischen Gewinde-Grundfläche des einen Hülsenstücks (1) eine in Achsrichtung (z,100) periodische Folge von Gewindestegen, Gewindesegmenten oder Gewindepunkten (1,1a',1a",1a*) angeformt wird;
(b) auf einer leicht gegenkonischen Grundfläche des anderen Hülsenstücks (2) eine in Achsrichtung (100,z) periodische Folge von Stegen oder Segmenten (1a,1a',1") angeformt wird.

2. Verfahren nach Anspruch 1, bei dem der Neigungswinkel (α₂) der konischen und/oder gegenkonischen Grundfläche so auf die radiale Höhe (t) der Segmente, Stege oder Punkte (1a,1a',1a",1a*) abgestimmt ist, daß jeder davon beim Entformen (E1,E2) aus der Spritzgußform (12,21) bei im wesentlichen rein translatorischer Entformungsbewegung nicht erneut in einer Werkzeugkontur einrasten kann, wobei eine leichte plastische Verformung nicht als "Rasten" angesehen wird.

3. Verfahren nach einem der erwähnten Ansprüche, bei dem mit elastischer Verformung der Gewindeelemente (Stege, Segemente, Punkte) in Richtung der Achse (z,100) entformt wird.

4. Verfahren nach Anspruch 1 oder 2, bei dem mit plastischer Verformung unter leichter Veränderung der Gewindeelemente (Stege, Segmente oder Punkte) in Richtung der Achse (z,100) entformt wird.

5. Verfahren nach einem der erwähnten Ansprüche, bei dem die Gewindeelemente nur in Richtung der Achse (z,100) entformt werden, insbesondere ohne oder ohne wesentliche radiale Backenbewegung oder Schraubbewegung entformt wird.

6. Verfahren nach einem der erwähnten Ansprüche, bei dem die Gewindestege, Segmente oder Punkte (Gewindeelemente) abgerundete (R) Kanten haben.

7. **Formwerkzeug** zur Durchführung des Verfahrens nach einem der erwähnten Ansprüche, bei dem
(a) eine Negativ-Kontur (12a,21a) einer Gewindestruktur (Stege, Segmente, Noppen oder Punkte) eines Innen- oder Außengewindes (1a,2a) einer Hülse (1,2) vorgesehen ist;
(b) ein Vorsprung (X1) im Formwerkzeug (12,21) zur Formung einer Vertiefung (50,60,I1) in der Hülsen-Gewindestruktur (1a,2a) bezüglich
- der nächsten mindestens im Abstand (σ) der Gewindesteigung entgegen der Entformungsrichtung (z,100) der Hülse benachbarten oder
- der übernächsten in Achsrichtung (z,100) benachbarten
Formwerkzeug-Vertiefung (X4) zur Formung der übernächsten bzw. darauf folgenden Erhöhung (51b,61b,I4) der Hülsen-Gewindestruktur (1a,2a) radial nicht oder nur geringfügig vorsteht; oder
(c) ein erster Vorsprung (X1;X4) im Formwerkzeug (12,21) zur Formung einer ersten Vertiefung (50,60,I1;A4) in der Hülsen-Gewindestruktur (1a,2a) bezüglich einem entgegen der Entformungsrichtung (F1;E2) benachbarten zweiten Vorsprung (X3;X2) im gleichen Formwerkzeug (12,21) zur Formung einer benachbarten zweiten Vertiefung (50a,60a,I3;A2) in derselben Hülsen-Gewindestruktur (1a,2a) ein radial geringeres Maß hat.

8. Formwerkzeug nach Anspruch 7, bei dem eine Verbindungslinie (L1,L2) aller Formwerkzeug-Vorsprünge eine gegenüber der Achse (100) und der Entformungsrichtung (z) des Formwerkzeugs (12,21) oder des Hülsenteils (1,2) geneigte (α₂) erste gerade Linie ergeben.

9. Formwerkzeug nach Anspruch 8 oder 7, bei dem eine Verbindungslinie (L1,L2) aller Formwerkzeug-Vertiefungen eine gegenüber der Achse (100) oder der Entformungsrichtung (z) des Formwerkzeugs (12,21) oder des Hülsenteils (1,2) geneigte (α₂) - insbesondere unter demselben Winkel (α₂) wie die vorerwähnte erste Linie geneigte - zweite gerade Linie ergeben.

10. Formwerkzeug nach einem der Ansprüche 7 bis 9, bei dem die zweite vor einer Formwerkzeug-Erhöhung (X1) liegende Formwerkzeug-Vertiefung (X4) - in Entformungsrichtung (z) betrachtet - radial etwa das gleiche Maß hat, wie die erwähnte Formwerkzeug-Erhöhung (X1), so daß
(a) das Formwerkzeug (21) im Gewinde-Formungsbereich (21a) für die Formung eines konischen Innengewindes (2a) in Richtung (z) der Entformungsbewegung (F1) der Außenhülse leicht konisch zulaufend ausgebildet ist; oder
(b) der Gewinde-Formungsabschnitt (1a) des Formwerkzeuges (12) zur Formung eines konischen Außengewindes (12a) in Richtung (z) der Entformungsbewegung (E2) des Hülsenstücks (1) mit Außengewinde leicht konisch aufgeweitet ist.

11. **Hülsenstück** mit konisch verlaufendem Gewinde-Schnellverbindungsabschnitt (1a,2a) für ein Schreibgerät, wie Kugelschreiber, Druckbleistift oder Tintenschreiber, erhältlich nach einem der vorstehenden Verfahrensansprüche oder erhältlich mit einer Vorrichtung nach einem der vorhergehenden Vorrichtungsansprüche, bei welchem Hülsenstück (2,4,HI,HA) mehrere, insbesondere mehr als zwei, bajonettartige Gewindeelemente (Stege, Segmente, Punkte) umfänglich beabstandet und in axialer Richtung (z, 100) hintereinander, aber auf stetig versetzten radialen Niveaus auf einer konischen Grundfläche (L1,L2) angeordnet sind.

12. **Hülsenstück** mit konisch verlaufendem Gewinde-Schnellverbindungsabschnitt (1a,2a) mit konischem Gewindegrund, erhältlich nach einem der erwähnten Verfahrensansprüche oder hergestellt mit einer Vorrichtung nach einem der erwähnten Vorrichtungsansprüche, bei welchem Hülsenstück (2,4,HI,HA) ein wendelförmig verlaufender - nicht unterbrochener - Gewindesteg (1a,2a) radial so dimensioniert ist, daß - im Schnitt gesehen - eine erste Gewindesteghöhe (I4,A1) im wesentlichen dasselbe radiale Maß hat, wie der übernächste Gewindegrund (I1,A4) in Entformungsrichtung (+z, -z, Figur 8).
